# EUROPÄISCHE PATENTSCHRIFT

(11) **EP 0 928 725 B1**
(45) Veröffentlichungstag und Bekanntmachung des Hinweises auf die Patenterteilung: **09.10.2002**
(21) Anmeldenummer: 98124144.1
(22) Anmeldetag: 19.12.1998
(51) Int. Cl.: B60T 1/06

(54) **Parksperreinrichtung für ein Kraftfahrzeug mit Stufenwechselgetriebe**
Parking brake arrangement for vehicles with gear box
Installation de frein de stationnement pour véhicules avec engrenage de changement vitesse

(30) Priorität: 08.01.1998 DE 19800431
(43) Veröffentlichungstag der Anmeldung: 14.07.1999
(73) Patentinhaber: ADAM OPEL AG, 65423 Rüsselsheim (DE)
(72) Erfinder: Klösel, Rainer, 63225 Langen (DE); Hangen, Götz, 55578 Wolfsheim (DE); Moser, Wolfgang, 65205 Wiesbaden (DE); Becker, Gernot, Dipl.-Ing.(FH), 55278 Dexheim (DE)
(74) Vertreter: Kümpfel, Heinz, Dipl.-Ing.

(56) Entgegenhaltungen:
- DE-A1- 2 224 484
- DE-A1- 3 203 653
- DE-A1- 3 220 260

## Beschreibung

Die Erfindung betrifft eine Parksperreinrichtung für ein Kraftfahrzeug mit Stufenwechselgetriebe gemäß dem Oberbegriff des Patentanspruches 1.

In einem Kraftfahrzeug mit einer Trennkupplung zwischen dem Antriebsmotor und einem Stufenwechselgetriebe, wobei sowohl die Trennkupplung als auch das Stufenwechselgetriebe von einer automatischen Schalteinrichtung betätigt werden, ist die Trennkupplung bei stehendem Antriebsmotor im allgemeinen offen, so daß zwischen Motor und Antriebsachse kein Drehmoment übertragbar ist. Beim Abstellen des Fahrzeuges kann somit die Bremswirkung des Motors nicht genutzt werden, um ein unbeabsichtigtes Abrollen des Fahrzeuges zu verhindern. Ein solches Kraftfahrzeug wird daher mit einer Parksperreinrichtung versehen.

Eine solche Parksperreinrichtung ist mit DE 32 20 260 A1 beschrieben. Bei dieser ist im Schaltbild des Schalthebels neben den üblichen Gangpositionen gegenüber einer Rückwärtsgangposition eine weitere Schaltposition vorgesehen, die als Parksperrposition ausgebildet ist. Beim Anwählen dieser Position wird über die Schaltmechanik des Getriebes eine fest am Getriebegehäuse gelagerte Parkklinke wirksam in Eingriff mit einem speziellen auf der Getriebeausgangswelle drehfest gelagerten Parkzahnrad gebracht. Die Getriebeausgangswelle ist damit gegen Verdrehen gesperrt. Somit ist das Fahrzeug gegen Abrollen gesichert.

Nachteilig ist bei einer Parksperre dieser Art, daß im Stufenwechselgetriebe ein gesondertes Parksperrenzahnrad auf der Getriebeausgangswelle sowie eine besondere Parkklinke vorgesehen werden müssen. Diese Teile erfordern nicht nur erhöhten Bauaufwand. Insbesondere das Parksperrenzahnrad verlängert das Stufenwechselgetriebe in nachteiliger Weise.

Der Erfindung liegt die Aufgabe zugrunde, eine Parksperreinrichtung der gattungsgemäßen Art zu schaffen, welche ohne ein zusätzliches Sperrad und ohne eine Parkklinke auskommt, somit eine Verlängerung des Getriebes und zusätzlicher Teileaufwand nicht erforderlich sind.

Die Erfindung löst diese Aufgabe mit den Merkmalen des Patentanspruches 1. Der Gegenstand des Unteranspruches ist eine vorteilhafte Weiterbildung der Erfindung.

Durch Anordnung der Parksperrposition auf einer besonderen Schaltebene kann beim Vorwählen dieser Ebene mit dem für das Schalten der Gänge vorgesehenen Schaltfinger der übliche Schaltbereich bei eingelegtem Rückwärtsgang verlassen werden, wobei gleichzeitig in die von den Schaltstangen gebildete Schaltgasse ein weiterer Schaltfinger eingreift. Dieser zusätzliche Schaltfinger gelangt vorteilhaft in die Schaltebene des höchsten Ganges des Stufenwechselgetriebes. Dieser Gang ist nun durch Verdrehen der Schaltwelle zusätzlich zum bereits eingeschalteten Rückwärtsgang einschaltbar. Wenn zwei Gänge gleichzeitig eingelegt sind, ist das Stufenwechselgetriebe blockiert. Die Abtriebswelle und somit auch die Antriebsräder des Fahrzeuges können sich nicht mehr drehen. Das Fahrzeug ist gegen unbeabsichtigtes Abrollen gesichert. Durch die Auswahl des höchsten Ganges als zweiten einzulegenden Gang für die Sperrung des Getriebes wird in Verbindung mit dem Rückwärtsgang, der bekanntlich die höchste Übersetzung aller Gänge aufweist, eine hohe Übersetzungsspreizung für das Sperren genutzt, so daß die Kräfte auf die Zahnräder im gesperrten Zustand relativ gering bleiben.

Ein Ausführungsbeispiel der Erfindung ist nachstehend anhand einer Zeichnung näher beschrieben. Es zeigen
- Fig. 1:: ein Schaltbild eines 5-Gang-Stufenwechselgetriebes mit Rückwärtsgang und Parksperre,
- Fig. 2:: einen Teil der Schaltwelle des Stufenwechselgetriebes gemäß Fig. 1 mit den Schaltfingern und den Schaltstangen,
- Fig. 3:: eine Ansicht auf die Schaltwelle gemäß Fig. 2 in Achsrichtung der Schaltwelle.

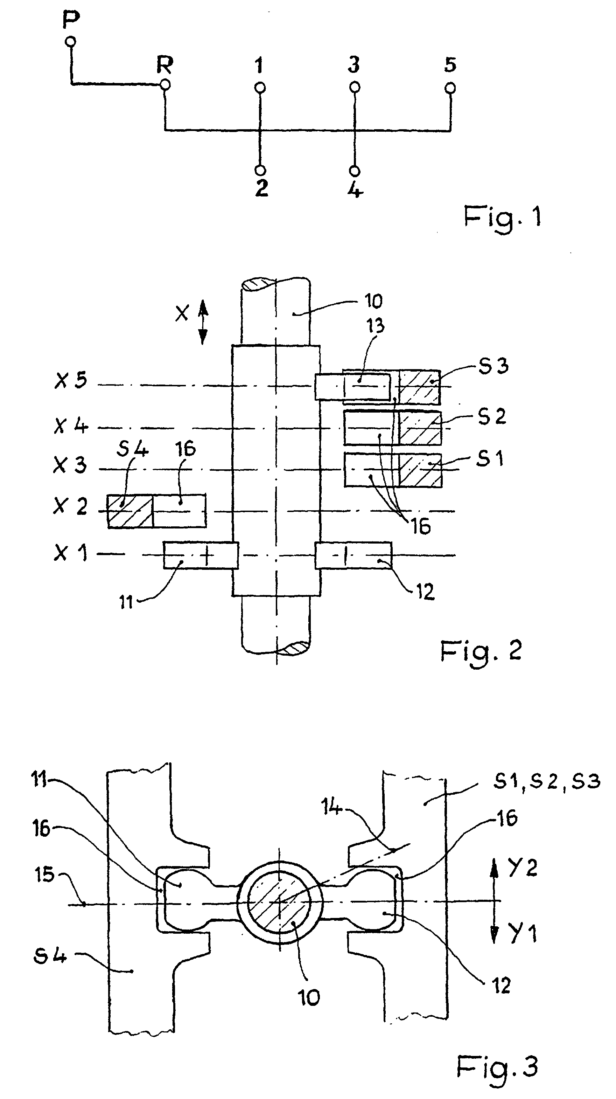

Eine Schaltwelle 10 ist in einem Schaltgehäuse eines Stufenwechselgetriebes begrenzt verdrehbar und axial verschiebbar gelagert. Die Schaltwelle 10 ist mit einem Schalthebel, der sowohl manuell als auch über eine Automatik angesteuert sein kann, getrieblich derart verbunden, daß bei einer Bewegung des Schalthebels in Querrichtung gemäß dem in Fig. 1 dargestellten Schaltbild die Schaltwelle 10 in axialer Richtung X bewegt wird (Fig. 2); bei einer Bewegung des Schalthebels in eine Längsrichtung gemäß dem in Fig. 1 dargestellten Schaltbild jedoch die Schaltwelle 10 um ihre Achse geschwenkt wird, wobei diese Schwenkbewegung je nach Auslenkung des Schalthebels in Richtung Y1 oder in Richtung Y2 (Fig. 3) erfolgt.

An der Schaltwelle 10 befinden sich drei Schaltfinger 11, 12, 13. Zwei dieser Schaltfinger 11, 12 sind in gleicher axialer Höhe der Schaltwelle 10 angeordnet und stehen sich radial gegenüber. Der dritte Schaltfinger 13 ist gegenüber den beiden anderen Schaltfingern 11, 12 axial um vier Schaltebenen nach oben versetzt und seine Mittelachse 14 (Fig. 3) ist gegenüber der Mittelachse 15 der beiden anderen Schaltfinger 11, 12 um die Achse der Schaltwelle 10 verdreht, und zwar um einen der Schwenkbewegung der Schaltwelle 10 in eine der Richtungen Y1 oder Y2 entsprechenden Winkel.

Seitlich neben der Schaltwelle 10 sind im Schaltgehäuse des Stufenwechselgetriebes vier parallel zueinander verlaufende und längsverschiebbare Schaltstangen S1, S2, S3, S4 angeordnet, die sich senkrecht zur Mittelachse der Schaltwelle 10 erstrecken. Jede dieser Schaltstangen S1 bis S4 ist in einer der Schaltebenen X1 bis X5 angeordnet. Drei der Schaltstangen, nämlich S1, S2 und S3, sind an der einen Seite der Schaltwelle 10, und zwar in den oberen Schaltebenen X3, X4, X5 angeordnet. Die vierte Schaltstange S4 ist an der anderen Seite der Schaltwelle 10 in einer tiefer liegenden Schaltebene X2 angeordnet. Jede der Schaltstangen S1 bis S4 hat eine Mitnehmernut 16, in welche die Schaltfinger 11, 12, 13 formschlüssig eingreifen können. Dazu sind die Mitnehmernuten 16 in den unmittelbar übereinander angeordneten Schaltstangen S1 bis S3 so angeordnet, daß sie bei Stellung des Schalthebels in der neutralen Wählgasse des Schaltbildes unmittelbar übereinanderliegen und eine Schaltgasse bilden. In dieser Schaltgasse kann der Schaltfinger 12 durch axiales Verschieben der Schaltwelle 10 entlang geführt werden. Befindet sich der Schaltfinger 12 in einer der Schaltebenen X3, X4 und X5, dann ist er in Eingriff mit einer der Mitnehmernuten 16 der Schaltstangen S1, S2 oder S3. Durch Verdrehen der Schaltwelle 10 wird die jeweilige Schaltstange, in welche ein Schaltfinger eingreift, axial verschoben.

An den Schaltstangen S1 bis S4 sind Schaltgabeln befestigt, die in an sich bekannter Weise auf Schaltkupplungen einwirken, welche auf den Getriebewellen drehbar angeordnete Zahnräder drehstarr mit den Getriebewellen verbinden und so Gangstufen herstellen.

Bei Eingriff des Schaltfingers 12 in die Mitnehmernut 16 der Schaltstange S1, also in der Schaltebene X3, wird durch Verdrehen der Schaltwelle 10 aus der Mittelstellung in Richtung Y1 der erste Gang eingeschaltet. Bei Verdrehen der Schaltwelle 10 aus der Mittelstellung in Richtung Y2 wird der zweite Gang geschaltet. Bei Eingriff des Schaltfingers 11 in die Mitnehmernut 16 der Schaltstange S4, also in der Schaltebene X2, wird mit dem Verschwenken des Schaltfingers 11 durch Drehen der Schaltstange 10 in Richtung Y1 der Rückwärtsgang R eingeschaltet. Bei Eingriff des Schaltfingers 12 in die Mitnehmernut 16 der Schaltstange S3, also in der Schaltebene X5, wird mit dem Verschwenken des Schaltfingers 12 mit der Schaltstange 10 in Richtung Y1 der fünfte Gang, d. h. der am geringsten übersetzte Gang, eingeschaltet.

Bei eingeschaltetem Rückwärtsgang R, bei dem der Schaltfinger 12 in Richtung Y1 aus der Mittellage ausgelenkt ist, liegt der am oberen Ende der Schaltwelle 10 befestigte Schaltfinger 13 mit seiner Mittelachse 14 in einer Mittellage, so daß der Schaltfinger 13 direkt über der von den Mitnehmernuten 16 der Schaltstangen S1 bis S3 gebildeten Schaltgasse liegt. Wird nun durch Vorwahl am Schalthebel die Schaltwelle 10 axial in die Schaltebene X1 verschoben, dann greift bei noch eingelegtem Rückwärtsgang R der Schaltfinger 13 in die Mitnehmernut 16 der Schaltstange S3 ein. Durch ein weiteres Verdrehen der Schaltwelle 10 in Richtung Y1 wird nun auch die Schaltstange S3 so verschoben, daß der fünfte Gang zusätzlich zu dem bereits eingeschalteten Rückwärtsgang R eingeschaltet wird. Damit ist das Stufenwechselgetriebe blokkiert. Eine Drehbewegung kann von dem so geschalteten Getriebe nicht übertragen werden. Diese Blockade wirkt auch auf die Antriebsräder und somit als Parksperre.

Die bei dem Stufenwechselgetriebe nach diesem Ausführungsbeispiel möglichen Schaltstellungen sind in übersichtlicher Form aus der nachstehenden Tabelle erkennbar:

| Gangwahl am Schalthebel | Schaltebene | Schaltrichtung des Schaltfingers | Schaltfinger in Eingriff | Eingelegter Gang | Zu bewegende Schaltstange |
|---|---|---|---|---|---|
| 1 | X3 | Y1 | 12 | 1 | S1 |
| 2 | X3 | Y2 | 12 | 2 | S1 |
| 3 | X4 | Y1 | 12 | 3 | S2 |
| 4 | X4 | Y2 | 12 | 4 | S2 |
| 5 | X5 | Y1 | 12 | 5 | S3 |
| R | X2 | Y1 | 11 | R | S4 |
| P | X1 | Y1 | 13 | R und 5 | S3 |

Damit ist ein Stufenwechselgetriebe geschaffen, welches durch eine mit einem Schalthebel anwählbare Parksperrposition gesperrt werden kann, ohne daß dafür ein gesondertes Sperrad mit einer schaltbaren Sperrklinke erforderlich ist. Der besondere Vorteil der Erfindung ist darin zu sehen, daß ein mit einer Parksperre ausgerüstetes Stufenwechselgetriebe gegenüber den bekannten Ausführungen axial kürzer und mit geringerem Kostenaufwand gebaut werden kann.

## Patentansprüche

1. Parksperreinrichtung für ein Kraftfahrzeug mit Stufenwechselgetriebe, mit einer Kupplung zwischen einem Antriebsmotor und dem Stufenwechselgetriebe, die bei ausgeschaltetem Antriebsmotor gelöst ist, mit einem Schalthebel zum Auswählen der Schaltstellung des Stufenwechselgetriebes, mit einer im Getriebegehäuse des Stufenwechselgetriebes verdrehbar und axialverschiebbargelagerten undmitdemSchalthebel in ihrer Stellung beeinflußbaren Schaltwelle (10), mit an der Schaltwelle (10) befestigten Schaltfingern (11, 12, 13), die in einer von mit Schaltgabeln oder dergleichen in Verbindung stehenden Schaltstangen (51, 52, 53, 54) gebildeten Schaltgasse durch axiales Verschieben der Schaltwelle (10) zwischen Schaltebenen bewegbar sind und in den Schaltebenen durch Verdrehen der Schaltwelle (10) die ausgewählten Schaltstangen (S1, S2, S3, S4) axial verschiebbar und damit Getriebestufen schaltbar sind, und mit einer am Schalthebel vorgesehenen Position zum Einschalten einer Parksperre, **dadurch gekennzeichnet, daß** die für die Schaltstufen des Stufenwechselgetriebes an der Schaltwelle (10) vorgesehenen Schaltfinger (11, 12) in der Schaltgasse über die Position des eingelegten Rückwärtsganges (R) hinaus durch Anwählen einer weiteren Schaltebene (X1) bewegbar sind und dabei die Schaltgasse verlassen, gleichzeitig ein weiterer mit der Schaltwelle (10) verbundener Schaltfinger (13) in eine Schaltebene (X5) der Schaltgasse eines Vorwärtsganges eintritt und durch Wählen der Parksperrposition (P) dieser Vorwärtsgang einschaltbar ist.

2. Parksperreinrichtung nach Anspruch 1, **dadurch gekennzeichnet, daß** der eine zusätzlich zum Rückwärtsgang (R) einschaltbare Vorwärtsgang der höchste Gang (5) des Stufenwechselgetriebes ist.

## Claims

1. Parking brake device for a motor vehicle with multi-step variable-speed transmission, with a clutch between a drive engine and the multi-step variable-speed transmission which is released when the drive engine is disengaged, with a gear lever for selecting the shift position of the multi-step variable-speed transmission, with a selector shaft (10) which is mounted axially displaceably and rotatably in the gearbox housing of the multi-step variable-speed transmission and which can be controlled in its position with the gear lever, with selector arms (11, 12, 13) which are attached to the selector shaft (10) and which are movable between shift planes by axial displacement of the selector shaft (10) in a shift channel formed by selector rods (S1, S2, S3, S4) connected to selector forks or the like, and the selected selector rods (S1 S2, S3, S4) are axially displaceable in the shift planes by rotation of the selector shaft (10) and hence gears can be shifted, and with a position provided on the gear lever for engaging a parking brake, **characterised in that** the selector arms (11, 12) provided on the selector shaft (10) for the gears of the multi-step variable-speed transmission are movable in the shift channel beyond the position of the engaged reverse gear (R) by selection of a further shift plane (X1) and in the process leave the shift channel, at the same time a further selector arm (13) connected to the selector shaft (10) enters a shift plane (X5) of the shift channel of a forward gear and by selection of the parking brake position (P) this forward gear can be engaged.

2. Parking brake device according to claim 1, **characterised in that** one forward gear which can be engaged in addition to the reverse gear (R) is the highest gear (5) of the multi-step variable-speed transmission.

## Revendications

1. Dispositif de frein de stationnement pour un véhicule automobile à boîte de vitesses à variation discontinue, avec un embrayage entre le moteur de propulsion et la boîte de vitesses, qui est ouvert lorsque le moteur est arrêté, avec un levier de commande de changement de vitesse pour sélectionner le rapport de boîte de vitesses, avec un axe de commande changement de vitesse (10) qui est monté tournant et coulissant dans la direction axiale, dans le carter de changement de vitesses, et dont la position peut être modifiée à l'aide du levier de commande de changement de vitesse, avec des doigts de commande (11, 12, 13) qui sont fixés à l'axe de commande de changement de vitesse (10) et peuvent être déplacés par coulissement axial dudit axe de commande de changement de vitesse (10) entre deux plans de commande, sur un trajet de commande qui est défini par des tiges de commande (S1, S2, S3, S4) liées à des fourchettes de changement de vitesse ou similaires, les tiges de commande sélectionnées (S1, S2, S3, S4) pouvant être déplacées axialement et des rapports d'engrenage pouvant être sélectionnés par rotation de l'axe de commande (10) dans les plans de commande, et avec une position prévue du levier de commande de changement de vitesse pour la sélection du frein de stationnement, **caractérisé en ce que** les doigts de commande (11, 12) prévus sur l'axe de commande (10) pour les rapports de la boîte de vitesses, sur le trajet de commande peuvent être déplacés au-delà de la position de marche arrière (R) obtenue par sélection d'un plan de commande (X1) supplémentaire et quittent ainsi le trajet de commande, **en ce que** simultanément un autre doigt de commande (13) lié à l'arbre de commande de changement de vitesse (10) entre dans un plan de commande (X5) du trajet de commande pour un rapport avant et que ce rapport avant peut être enclenché par sélection de la position de frein de stationnement (P).

2. Dispositif de frein de stationnement selon revendication 1, **caractérisé en ce que** le rapport avant pouvant être enclenché en plus du rapport arrière (R) est le rapport le plus élevé (5) de la boîte de vitesses.
